Europäisches Patentamt

(19) European Patent Office

Office européen des brevets

(11) Numéro de publication : **0 277 872 B1**

(12) **FASCICULE DE BREVET EUROPEEN**

(45) Date de publication du fascicule du brevet :
28.08.91 Bulletin 91/35

(51) Int. Cl.$^5$ : **B07C 5/12**, **B65G 47/91**,
**B07C 5/36**

(21) Numéro de dépôt : 88400167.8

(22) Date de dépôt : 26.01.88

(54) **Pont aiguilleur.**

(30) Priorité : 29.01.87 FR 8701062

(43) Date de publication de la demande :
10.08.88 Bulletin 88/32

(45) Mention de la délivrance du brevet :
28.08.91 Bulletin 91/35

(84) Etats contractants désignés :
**DE ES FR GB IT**

(56) Documents cités :
**FR-A- 2 522 546**
**US-A- 3 659 710**
**US-A- 4 146 134**

(56) Documents cités :
**US-A- 4 391 372**
**PATENT ABSTRACTS OF JAPAN, vol. 10, no.
33 (M-452)[2090], 8 février 1986; & JP-A-60 188
226 (EZAKI GURIKO K.K.) 25-09-1985**

(73) Titulaire : **SAINT-GOBAIN EMBALLAGE**
**Les Miroirs 18, Avenue d'Alsace**
**F-92400 Courbevoie (FR)**

(72) Inventeur : **Rieger, Jacques-Etienne**
**16, Avenue Eugène Gentil**
**F-71100 Chalon S/Saone (FR)**

(74) Mandataire : **Eudes, Marcel et al**
**Saint-Gobain Recherche 39 Quai Lucien
Lefranc**
**F-93304 Aubervilliers Cedex (FR)**

Jouve, 18, rue Saint-Denis, 75001 PARIS

## Description

L'invention a trait à l'acheminement et à la mise en file d'articles de dimensions moyennes en queue d'un transporteur lent, par exemple à la sortie d'un appareil de traitement continu tel que cabine de séchage, four, etc.

En particulier, lors de la fabrication d'articles de verre creux tels que bouteilles et flacons, leurs machines de formage les déposent sur un convoyeur à palettes qui les achemine en file, à intervalles déterminés, en direction d'une arche de recuisson où ils parviennent pour achever lentement de s'y refroidir.

Au bout chaud, soit à l'extrémité amont de l'arche, le convoyeur en question se présente transversalement en tête du tapis transporteur de cette dernière, devant un appareil équipé d'une barre qui, par rangées successives à espacement donné, transfère les articles sur ce tapis ; il peut s'agir en particulier d'un simple pousseur. Le nombre d'articles de chaque rangée, déterminé par la largeur de l'arche, est très variable et peut dépasser quarante ; il diffère généralement du nombre des postes des machines de formage, avec de préférence un commun multiple de rang peu élevé, pour qu'un même rangement revienne avec une périodicité faible ce qui facilite la surveillance de la fabrication.

La barre de transfert est le plus souvent montée sur un pont par l'intermédiaire d'un mécanisme élévateur, ce qui rend l'appareil enjambeur et lui fournit ainsi le temps nécessaire pour introduire chacune des rangées sans brutalité tandis que la suivante se présente, en lui permettant, au retour, de passer au dessus sans en heurter les premiers articles.

Au bout froid, c'est-à-dire à la sortie de l'arche, il y a lieu de remettre les articles en file pour leur faire subir un à un divers contrôles : pour alimenter cette nouvelle chaîne, on a l'habitude de laisser passer les articles sur un convoyeur de reprise à palettes placé transversalement en queue du tapis.

Il est toutefois connu par le brevet US-A-4146134 de renverser systématiquement des bouteilles, pour les reprendre à l'aide d'un dispositif de transfert doté d'une rangée d'organes disposée transversalement au transporteur, qui redressent chacune d'elles d'une façon différente selon qu'elles s'y présentent le col vers l'aval ou vers l'amont, les remettant debout par basculement sur la piste du convoyeur transversal.

Il ne suffit pas d'éliminer les articles défectueux mais il convient d'en détecter la source et de déceler statistiquement l'apparition des anomalies. On commence donc, en principe, par lire le numéro ou repère de moule de chaque article afin de pouvoir apporter rapidement au lieu voulu les corrections nécessaires, mais aussi d'éliminer systématiquemement, avant toute autre intervention, tout article d'une série signalée comme à priori défectueuse à partir des informations reçues : on préfère alors la repérer d'avance et opérer en amont de la chaîne de contrôle, par exemple manuellement après avoir marqué les articles en cause, ce qui allège et facilite le travail des machines placées en aval. On en profite aussi pour sélectionner périodiquement un article issu de chaque moule en vue de l'examiner à fond, passant même au besoin de ce contrôle statistique à un contrôle systématique sur tel ou tel moule suspect.

En sortie de chaîne, les articles acceptés seront reformés en plateaux qui seront empilés sur des palettes en vue de l'expédition.

En cas d'engorgement, la chaîne de contrôle s'arrête et la production de l'arche doit vite être transférée sur une aire de stockage auxiliaire : on emploie comme tel un tapis secondaire, placé au delà du convoyeur d'extraction et qui, après avoir alors reculé pas à pas pour accumuler les articles permettra ensuite de les reprendre en vrac, en sens inverse, pour les réintroduire dans le circuit normal.

On voit que cette phase de la fabrication impose une succession de tris ou d'aiguillages.

L'invention a pour objet de perfectionner l'opération de reprise du transporteur lent vers l'alimentation des postes ultérieurs, ici en particulier vers la chaîne de contrôle, en vue de simplifier les tris préalables donc d'accélérer leur cadence ; elle permettra même d'alléger l'appareillage nécessaire en renonçant à identifier un à un les numéros de moules, ce qui réduira aussi l'emprise des chaînes.

A cette fin, elle propose d'effectuer ces tris à priori lors de la reprise, à l'aide d'un dispositif associant à un convoyeur transversal à pistes multiples un pont aiguilleur à déplacement longitudinal doté d'une rangée transversale d'organes extracteurs à commande individuelle de la prise, chacun en regard d'une colonne d'articles sur le transporteur. Quoiqu'il fonctionne en sens inverse, ce pont sera avantageusement d'un type comparable dans une certaine mesure à celui des pousseurs enjambeurs précités.

Le principe utilisé consistera à venir au devant de chacune des rangées successives au moment ou elle arrive en tête du tapis transporteur principal, à en saisir l'ensemble des articles, puis à reculer pour les relâcher individuellement sur des pistes parallèles successives du convoyeur transversal en fonction de critères choisis à l'avance, pour revenir, pendant que ce convoyeur les évacue, attendre la rangée suivante désormais passée en tête.

De façon typique, le convoyeur de reprise présente au moins trois voies distinctes à savoir, d'amont en aval, selon la direction de défilement du tapis, une voie de prélèvement pour rejets ou contrôles spéciaux et une voie d'évacuation normale puis, de préférence, à l'arrière, une voie supplémentaire de réintroduction à partir du tapis accumulateur. Certaines de ces voies pourront être dédoublées, en particulier la voie de prélèvement, ou posséder un double sens de circulation.

Le convoyeur de reprise est de préférence précédé d'une fosse permettant l'élimination d'articles brisés, avec leurs débris ou simplement renversés, comme il sera expliqué plus loin.

Outre la largeur du convoyeur, le parcours du pont couvre d'une part une longueur suffisante du tapis transporteur, d'autre part l'extrémité contiguë du tapis accumulateur.

En principe, les articles sont arrêtés frontalement, saisis puis extraits horizontalement vers l'aval, enfin réemjambés après dépose.

La suite de la description montrera l'avantage en simplicité, en souplesse, en cadence et en sécurité de fonctionnement qu'apporte, pour autant que l'article s'y prête, une prise effectuée par aspiration sur une course notable : le pont sera ainsi équipé non de pinces à prise longitudinale ou même transversale, mais d'une barre trieuse porteuse de groupes extracteurs à ventouses souples, à raison d'un pour chaque colonne d'articles sur le tapis transporteur.

Le pont travaille alors avantageusement de la façon suivante : asservi à un microprocesseur en dialogue avec l'unité de gestion, il avance au devant des articles de la rangée de tête ; barre abaissée et en attente, il les saisit un à un, les réalignant si besoin était dès qu'ils se présentent et les décollant légèrement du tapis ; il recule jusqu'au convoyeur de reprise ; le vide sur les ventouses est alors supprimé sélectivement, selon une séquence préétablie en fonction de la répartition périodique des articles sur le tapis, de façon à déposer au passage sur leurs pistes respectives ceux réputés à priori défectueux, ceux choisis en vue d'un examen spécial, enfin les articles restants. Le pont recule enfin pour finir de dégager la voie d'évacuation et, la barre trieuse se relevant, son mouvement peut alors s'inverser pour le ramener en attente ; la barre enjambe les articles qui viennent d'être aiguillés et sont en cours d'évacuation puis, une fois revenue en amont du convoyeur transversal, elle se rabaisse, prête à aborder la phase suivante.

Si pour une raison quelconque la chaine de contrôle est saturée ce qui oblige à dériver une partie de la production vers le stockage, le pont recule davantage avant de lâcher les articles courants, afin de les faire passer sur le tapis secondaire ; il reviendra alors prendre la rangée suivante, pour lui faire suivre à nouveau la voie normale ou au besoin la stocker à son tour. Les articles acceptés restent en ordre, de sorte qu'ils pourront ultérieurement être réintroduits en sens inverse, le tapis accumulateur les ramenant sur le convoyeur comme il sera expliqué plus loin de façon détaillée.

D'autres caractéristiques de l'invention ressortiront d'un exemple décrit de façon détaillée, en référence aux dessins, qui montrent avec divers arrachés :

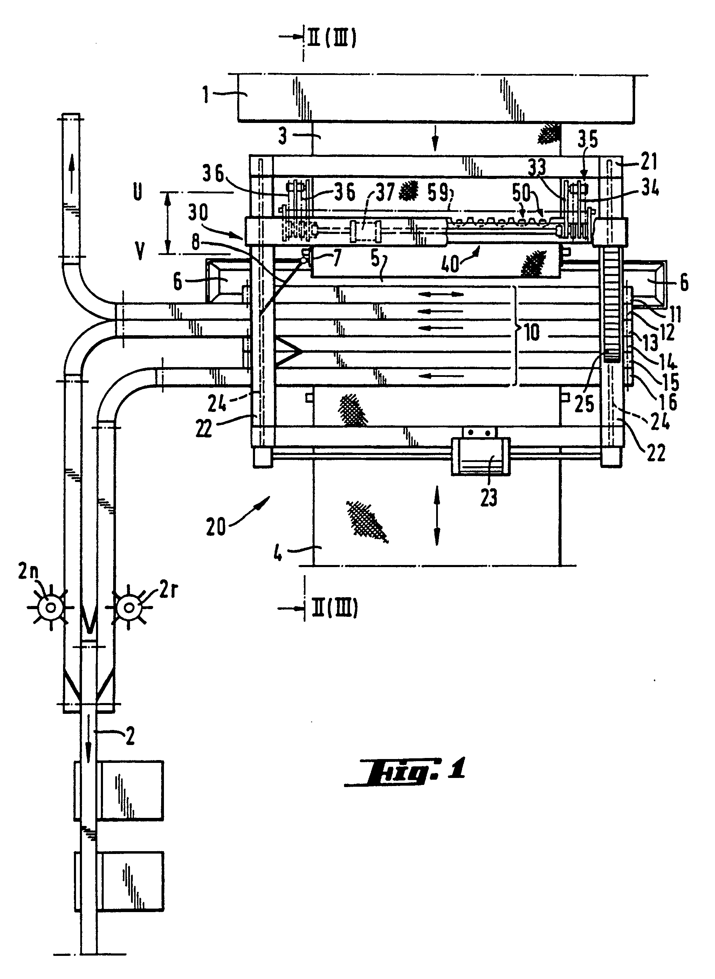

— figure 1 : une vue en plan de l'ensemble de l'appareil,
— figure 2 : à plus grande échelle, une coupe longitudinale en élévation,
— figure 3 : une coupe transversale de la barre trieuse,
— figure 4 : une vue en plan de cette barre.

Le dispositif, installé à la sortie de l'arche 1 de recuisson de bouteilles, est normalement destiné à alimenter la chaîne de contrôle 2. Il comprend, placé à l'extrémité aval du tapis transporteur 3, entre celui-ci et le tapis secondaire d'accumulation 4, derrière un espace libre ouvrant une fosse 5, le convoyeur de reprise multiple 10. Un portique 20, monté à cette intersection, porte le pont aiguilleur 30 dont la barre trieuse 40 est munie de quinze groupes extracteurs 50, à ventouses, à raison d'un par colonne de bouteilles sur le tapis transporteur.

Le convoyeur de reprise 10 possède six pistes transversales indépendantes :

La piste 11 dessert la voie de rejet ; elle est à double sens et débouche à droite ou à gauche sur des bacs à calcin 6, ce qui lui permet d'évacuer alternativement de part ou d'autre du tapis les articles à éliminer.

La piste 12 alimente la voie de prélèvement ; celle-ci conduit vers des postes d'examen détaillé qui n'ont pas à être décrits ici.

La piste 13 correspond à la voie d'évacuation normale, dont la file d'attente alimente la chaîne de contrôle 2 par l'intermédiaire d'une roue distributrice 2n.

Les pistes 14 et 15 ne sont normalement pas mobiles : elles constituent seulement une zone neutre dont la largeur correspond à l'encombrement longitudinal de la barre du pont aiguilleur et dont l'utilité apparaîtra plus loin.

La piste 16 est une piste de réintroduction : elle peut au besoin se mettre en route pour évacuer rangée par rangée des articles restitués par le tapis accumulateur où ils se trouvaient en attente, ceci en continu ou plus souvent en alternance avec la piste normale 13 ; par l'intermédiaire d'une autre roue distributrice 2r, elle alimente comme elle la chaine de contrôle 2.

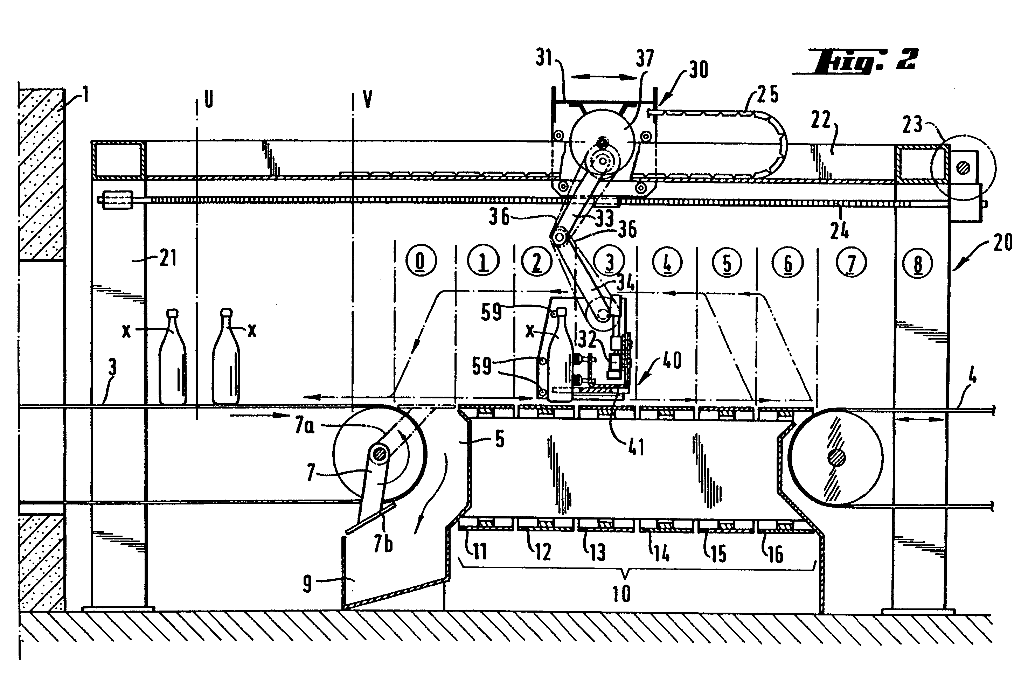

On peut ainsi distinguer d'amont en aval, au delà d'une zone d'extraction comprise entre deux positions extrêmes U et V sur le tapis transporteur 2, neuf zones de transfert respectivement repérées de 0 à 8 sur la figure 2. Lorsque les bouteilles dont le pont est chargé se trouvent par exemple en zone 2, au dessus de la piste 12, il occupe une position qui, couvrant les zones 2 et 3, sera dénommée 23, et ainsi de suite.

Sur l'axe du tambour aval du tapis transporteur 3 pivote une plaque 7, mobile dans la fosse 5 : si l'appareil, pour une raison quelconque, se trouve hors service, cette plaque vient se placer dans la position a de la figure 2 ; elle constitue une passerelle entre le tapis transporteur et le convoyeur de reprise 10 qu'elle permet ainsi d'alimenter directement, un aiguillage 8 dirigeant les bouteilles vers la chaîne 2. Lorsque l'appareil est en service, cette plaque s'efface en position b, ouvrant une trappe que le pont fait franchir aux bouteilles à trier mais d'où toute bouteille renversée ou cassée lors de la traversée de l'arche de recuisson et tout débris tomberont dans un bac à calcin 9.

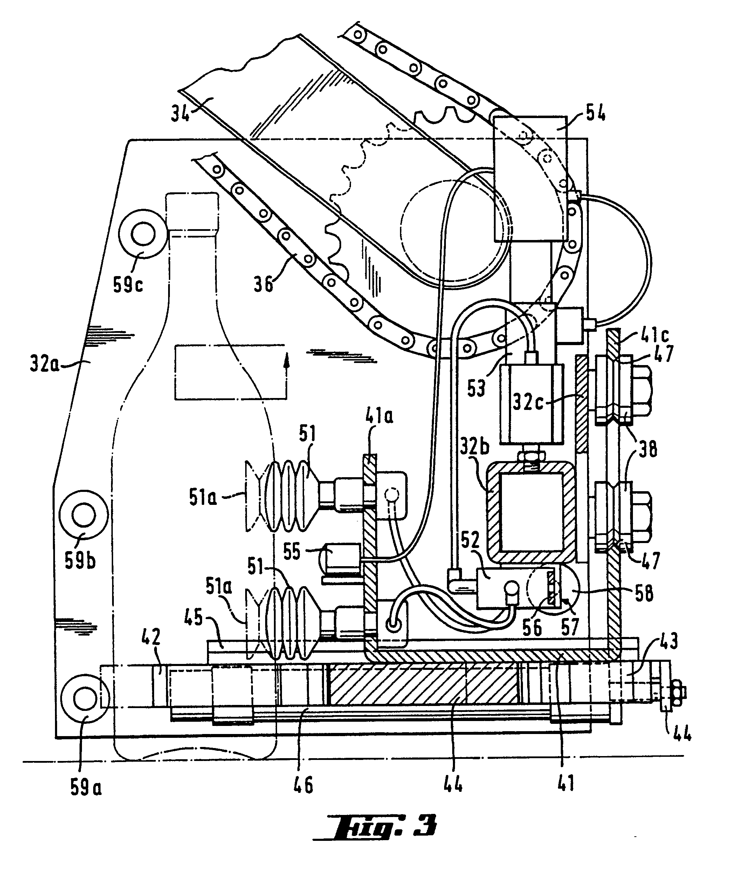

Porté sur quatre pylônes 21, le portique 20 comprend deux rails longitudinaux 22, sur lesquels le pont 30 circule, entraîné par un moteur 23 agissant sur deux vis d'entraînement 24, et alimenté par un chemin de câbles articulé 25. Le pont est ici constitué d'une poutre 31 supportant une membrure 32, articulée classiquement sur la poutre 31 par l'intermédiaire des deux bras 33 et 34 de deux genouillères 35. Celles-ci sont équipées d'une transmission à chaînes 36 formant pantographe et leurs bras 33 commandés par un vérin rotatif 37 : la rotation de ce vérin déplace ainsi verticalement la membrure 32 ; plus visible sur la figure 3, celle-ci comprend deux joues 32a reliées par une entretoise 32b, et dont les ailes en retour 32c portent chacune un train de galets 38.

La barre trieuse 40 est formée principalement d'une poutrelle en U 41 dont l'âme supporte un peigne amont 42 et un peigne aval 43, appartenant ici à un même râtelier 44.

Son aile avant 41a porte la succession des groupes extracteurs 50, placés entre les dents des peignes. Son aile arrière 41c possède à chaque extrémité une ouïe formant deux rails 47 qui roulent sur les galets 38. La poutrelle 41 est donc montée flottante avec un débattement transversal de quelques centimètres ; ainsi le peigne 42 permet-il de guider chaque bouteille en face d'un groupe extracteur mais inversement, en raison de l'inertie de l'ensemble de la rangée, ses dents sont aussi capables d'entraîner la poutrelle 41 pour qu'elle suive d'elle-même une éventuelle dérive des colonnes à l'intérieur de l'arche.

Le râtelier 44 est muni de glissières 45, montées de place en place dans des découpes en queue d'aronde 41b pratiquées sur la poutrelle 41. Deux vérins 46, placés aux extrémités, d'un côté et de l'autre des tapis, permettent ainsi de le déplacer de plusieurs centimètres, soit vers l'avant, position normale utilisée lorsque le pont extrait les bouteilles du tapis principal, soit vers l'arrière, comme on le verra plus loin, lorsqu'il travaille en liaison avec le tapis secondaire.

Il est à noter que l'on pourrait aussi prévoir deux peignes indépendants, et en munissant le second d'une commande transversale, l'utiliser pour réaligner les bouteilles sur le tapis secondaire, ce qui peut dans certains cas être plus avantageux.

Comme le montre la figure 3, chaque groupe extracteur 50 possède, montées l'une au dessus de l'autre, deux ventouses frontales 51 dotées d'un soufflet 51a qui leur procure une appréciable souplesse et une course notable. Il comprend encore deux venturis 52, à raison d'un par ventouse, une unique électrovanne 53 qui alimente ces venturis en air comprimé et un relais 54 de pilotage de cette électrovanne, asservi à un microprocesseur. Un capteur optique de proximité 55 permet de détecter la présence d'un article sur les ventouses ; d'autres types de capteurs pourraient d'ailleurs être utilisés, notamment pneumatiques : on pourrait en particulier détecter directement le vide sur les ventouses.

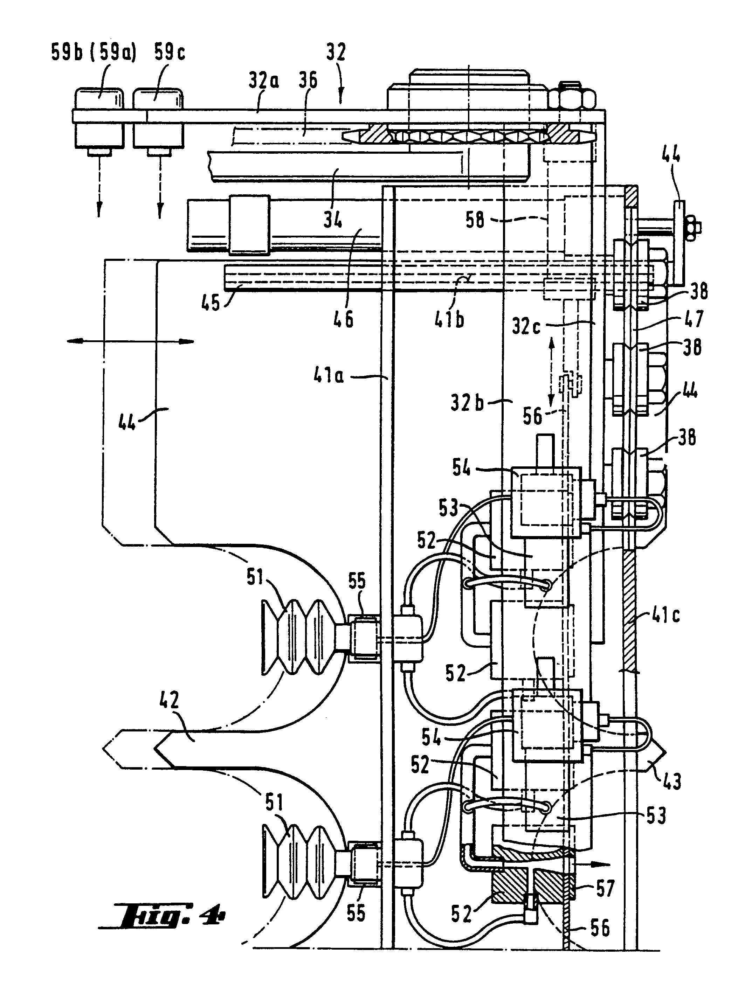

L'entretoise 32b est essentiellement formée d'un tube qui sert à alimenter les groupes extracteurs en air comprimé et supporte les électrovannes, raccordées directement, et leurs relais, ainsi que les venturis, dont une tirette perforée 56 guidée par des cavaliers 57 et mue par un vérin 58 permet d'autoriser ou d'interdire la sortie normale, comme on peut le voir sur l'arraché de la figure 4 ; on pourrait encore raccorder plusieurs sorties groupées à une même électrovanne de barrage.

Enfin une barrière optique 59 est montée transversalement en tête du pont ; elle comprend de préférence un ensemble de plusieurs émetteurs et récepteurs formant en avant, en bas une ligne 59a, à la verticale de celle-ci mais à une hauteur supérieure à un diamètre une ligne 59b, à proximité des ventouses mais en haut une ligne 59c.

Chaque phase de fonctionnement des groupes extracteurs se déroule normalement comme suit :

Au cours de la course avant, par exemple en zone 0, tandis que la barre trieuse 40 s'abaisse, l'électrovanne d'air comprimé 53 s'ouvre, alimentant les venturis 52 ; or la tirette 56 est placée par le vérin 58 en position de fermeture de leurs sorties : l'air est donc refoulé vers les ventouses 51 dont il provoque la purge ; mais le vérin 58 se déplace aussitôt, de sorte que l'air peut repasser par les sorties normales, ce qui crée une dépression sur les ventouses correspondantes.

Dès qu'une bouteille X se présente devant elles, elle intercepte le champ lumineux de la barrière 59 puis comprime les soufflets 51a jusqu'à libérer à nouveau ce champ, : aussitôt qu'attirée par les deux ventouses, chacune des bouteilles présentes devant un groupe extracteur a été saisie par lui, la barrière, entièrement libérée, autorise le pont 30 à reculer vers le convoyeur transversal 10. Une venue en butée sur le peigne avant du râtelier peut dégager son fond de tout contact avec le transporteur en la faisant un peu basculer mais au besoin, une légère remontée du pont peut aussi soulever légèrement la rangée.

A un moment choisi, l'électrovanne 53 se ferme, coupant le vide sur les ventouses, ce qui libère la bouteille sur la piste voulue ; le pont continuant à reculer, le peigne 42 dégage la voie correspondante, ce qui permet aux bouteilles de s'échapper latéralement.

Une fois toutes les électrovannes fermées, leurs bouteilles libérées et les voies du convoyeur 10 dégagées, le vérin 37 fait remonter la barre 40 ; la tirette 56 condamne d'autre part les venturis : l'appareil se trouve prêt pour une nouvelle phase.

Si, par suite d'une défaillance, l'une des bouteilles n'a pas été prise par ses ventouses, elle intercepte à nouveau la barrière 59 au début du recul du pont, ce qui permet de signaler l'incident ; mais le pont pourra faire une deuxième tentative à la phase suivante, la bouteille en cause étant alors traitée comme une rangée complémentaire.

Pour décrire un cycle complet, on supposera qu'il existe sur la machine de formage dix moules repérés de A à K et dans l'arche quinze colonnes de bouteilles repérées de (1) à (15) ; que d'autre part le moule B se trouve démonté de sorte que l'emplacement correspondant est vide, que le moule E est signalé défectueux mais que des bouteilles fabriquées par lui sont encore en place sur le tapis transporteur, qu'enfin, parmi celles prélevées de cinq en cinq minutes pour un contrôle complet, une doit être choisie au cours du cycle en provenance du moule J :

Les bouteilles se présentent alors par séquences de deux rangées réparties de la façon suivante :

| (01) | (02) | (03) | (04) | (05) | (06) | (07) | (08) | (09) | (10) | (11) | (12) | (13) | (14) | (15) |
|------|------|------|------|------|------|------|------|------|------|------|------|------|------|------|
| A    |      | C    | d    | e    | F    | G    | H    | J    | K    | A    |      | C    | D    | E    |
| F    | G    | H    | J    | K    | A    |      | C    | D    | E    | F    | G    | H    | J    | K    |

Au cours d'une première phase, le pont avance au devant des bouteilles de la première rangée, s'arrête et les saisit ; au besoin l'air comprimé est coupé sur les groupes extracteurs correspondant aux colonnes (02) et (12). Puis le pont recule ; lorsqu'il parvient en position 12, il libère les bouteilles "E" correspondant aux colonnes (05) et (15), qui se placent ainsi en zone 1 sur la piste 11 ; en position 23, il libère la bouteille "J" de la colonne (09) en zone 2 sur la piste 12 ; quand il atteint la position 34, il lâche les autres en zone 3 sur la piste 13, avant de s'arrêter pour repartir en avant en position haute.

Au cours de la seconde phase, la séquence de tri diffère en ce qu'en zone 1, le pont libère la bouteille "E" de la colonne (10) et qu'en zone 2, il ne lâche aucune bouteille.

Au fur et à mesure, les capteurs 55 fournissent à travers les relais 54 la liste des bouteilles déposées sur chaque convoyeur.

Le cycle opératoire intrinsèque est un peu plus rapide que celui de fabrication et de chargement au bout chaud et l'avance du pont est réglée soit par un relais à temps, soit de préférence par les capteurs optiques, en l'occurrence par le couple des lignes 59a et 59b de la barrière 59, qui déclenche le freinage et l'arrêt, au besoin la mise en action des ventouses ; ceci lui permet de mettre à profit sa marge de vitesse pour monter au devant des rangées successives, jusqu'à une position amont extrême U, afin d'accroître la souplesse de manoeuvre en ménageant progressivement des temps d'arrêt capables de couvrir plusieurs cycles.

Pour une raison quelconque les rangées de bouteilles peuvent être perturbées. Si l'on suppose par exemple que, des deux bouteilles "d" et "e" repérées plus haut en minuscules, la bouteille "e" a été enlevée mais que la bouteille "d" a alors été renversée, le capteur de la ligne 59b ne sera plus excité en même temps que celui de la ligne 59a lors de la première phase du cycle et signalera l'incident : le pont pourra continuer à opérer, les capteurs 55 fournissant alors une liste modifiée A, C, F, G, H, K, A, C, D de bouteilles libérées en zone 3. Mais lors de la phase suivante, si le pont, en fin de course avant, détecte à nouveau la bouteille "d", au lieu de s'arrêter, il se mettra aussitôt à reculer devant elle jusqu'à ce qu'un opérateur soit intervenu ; au besoin, cette bouteille ou ses débris éventuellement présents sur le tapis transporteur viendront basculer dans la fosse 9, le pont revenant alors aussitôt saisir la rangée suivante dans la position aval extrême d'extraction V. Ensuite le pont séparera comme précédemment la dernière bouteille "E" des dernières autres bouteilles de la séquence, que la roue 2n libérera par rafales vers la chaîne de contrôle 2, tandis que les relais 54 en transmettront la liste F, G, H, J, K, A, C, D, F, G, H, J, K au microprocesseur.

Au cours des cycles suivants et à moins d'un nouvel incident, la position d'extraction des bouteilles sur le tapis remontera progressivement vers l'amont.

Si maintenant la chaîne de contrôle est saturée, la roue 2n interdit l'évacuation normale. Pour permettre d'effectuer un stockage intermédiaire sur le tapis d'accumulation, le pont modifie son cycle : lors d'une phase initiale, il ne libère plus les bouteilles courantes lorsqu'il parvient en position 34, sur la piste 13 d'évacuation normale, mais en position 45, en attente sur la piste 14, normalement immobile, et il augmente son recul jusqu'en position 56 : lors de la phase consécutive, à partir du moment où, ayant extrait les bouteilles de la rangée suivante, il s'engagera en position 34 puis 45 et enfin 56, il repoussera les premières entre les dents du peigne arrière 43, faisant enfin reculer son râtelier pour les engager entièrement en zone 7, c'est-à-dire sur le tapis accumulateur 4, qui reculera alors d'un rang, à son tour, libérant cette zone de recueil pour les placer en zone 8.

Aussitôt l'incident réglé, le pont pourra reprendre son cycle opératoire normal, mais en supprimant périodiquement une phase d'extraction par un arrêt en position 45, pour permettre au tapis secondaire, avançant rang par rang, de réintroduire les bouteilles provisoirement écartées dans le circuit normal en les ramenant sur la voie de réintroduction constituée par la piste 16 du convoyeur de reprise.

Il est à noter que le pont qui vient d'être décrit serait à même d'opérer en aveugle, par rangées entières, si on se proposait seulement de présenter celles-ci à des postes de travail divers. Mais si ce mode de fonctionnement était le seul désiré, il serait indiqué de simplifier la structure de l'appareil puisque ses organes de prise ne seraient plus appelés à fonctionner individuellement.

## Revendications

1. Dispositif de reprise d'articles en queue d'un transporteur (3) par un convoyeur (10) les transportant dans une direction transversale à celle de ce transporteur, à l'aide d'un dispositif de transfert doté d'une rangée d'organes à prise individuelle disposée transversalement au transporteur, caractérisé en ce que ces organes sont des organes extracteurs (50) à commande individuelle de la prise, que le convoyeur de reprise est un convoyeur à palettes (10) à pistes multiples indépendantes et que le dispositif de transfert est un pont aiguilleur (30) mobile longitudinalement par rapport au transporteur (3) et apte à relâcher séparément les articles sur l'une ou l'autre desdites pistes.

2. Dispositif selon la revendication 1, caractérisé en ce que ledit convoyeur est précédé d'une fosse (5) permettant l'élimination d'articles anormaux.

3. Dispositif selon la revendication 2, caractérisé en ce qu'une plaque (7), mobile dans la fosse, constitue une passerelle entre le transporteur (3) et le convoyeur de reprise.

4. Dispositif selon la revendication 1, caractérisé en ce que les organes de prise sont portés frontalement par une barre trieuse (40) montée elle-même par l'intermédiaire d'un mécanisme élévateur, à raison d'un organe pour chaque colonne d'articles sur le transporteur.

5. Dispositif selon la revendication 4, caractérisé en ce qu'une série de capteurs (55) décomptent les articles déposés sur chaque piste (11 à 16) du convoyeur par les organes de prise.

6. Dispositif selon la revendication 4, caractérisé en ce que la barre trieuse est montée avec un débattement transversal.

7. Dispositif selon la revendication 4, interposé entre le transporteur principal et un transporteur accumulateur auxiliaire (4), et caractérisé en ce que le convoyeur comprend à l'arrière une piste (16) séparée des précédentes par une zone neutre (14,15) dont la largeur correspond à l'encombrement longitudinal de la barre du pont aiguilleur.

8. Dispositif selon la revendication 7, caractérisé en ce que la barre est munie de deux peignes travaillant l'un (42) vers l'avant, lorsque le pont extrait les articles du transporteur principal, l'autre (43) vers l'arrière, lorsqu'il opère en liaison avec le transporteur secondaire.

9. Dispositif selon la revendication 4, caractérisé en ce que les organes de prise sont des groupes extracteurs à ventouses frontales (51) travaillant par aspiration vers l'aval.

10. Dispositif selon la revendication 9, caractérisé en ce que chaque groupe extracteur possède des ventouses souples raccordées à un venturi (52) qu'alimente une électrovanne (53) pilotée par un relais (54) asservi à un microprocesseur.

11. Dispositif selon la revendication 10, caractérisé en ce qu'une interdiction (56) de la sortie normale des venturis permet de purger les ventouses.

12. Dispositif selon la revendication 9, caractérisé en ce qu'au cours de son cycle de travail, asservi à un microprocesseur, le pont :
    — avance au devant des articles (X) de la rangée de tête ;
    — barre abaissée, les saisit un à un, les réalignant au besoin et les décollant légèrement du tapis ;
    — recule jusqu'au convoyeur de reprise, le vide sur les ventouses étant alors supprimé sélectivement de façon à répartir les articles sur les pistes voulues du convoyeur ;
    — dégage enfin la voie d'évacuation ;
    — la barre trieuse se relevant, enjambe les articles qui viennent d'être aiguillés pour revenir en attente, barre abaissée, en amont du convoyeur.

13. Dispositif selon la revendication 12, caractérisé en ce que le pont possède deux positions extrêmes de recul (45, 56).

14. Dispositif selon la revendication 12, caractérisé en ce que le pont possède une avance variable entre deux positions extrêmes (U, V).

15. Dispositif selon la revendication 14, caractérisé en ce qu'une barrière optique (59) montée en tête du pont en commande le cycle opératoire.

## Patentansprüche

1. Vorrichtung zur Übernahme von Gegenständen vom Ende einer Fördereinrichtung (3) durch einen Förderer (10), der sie in einer Richtung quer zur Richtung der Fördereinrichtung mit Hilfe einer Übergabevorrichtung transportiert, die eine quer zum Förderband angeordnete Reihe von Einzelmitnahmelementen aufweist, **dadurch gekennzeichnet, daß** diese Elemente einzeln steuerbare Saugorgane (50) für die Übernahme sind, und daß der Übernahmeförderer ein Plattenbandförderer (10) mit einer Anzahl von unabhängigen Spuren ist und daß die Übergabevorrichtung eine Verteilerbrücke (30) ist, die in Längsrichtung bezüglich des Förderbands (3) bewegbar ist und die Gegenstände einzeln auf die eine oder andere der Spuren freigibt.

2. Vorrichtung nach Anspruch 1, **dadurch gekennzeichnet, daß** dem Förderer ein Schacht (5) für die Entfernung nicht ordnungsgemäßer Gegenstände vorgeschaltet ist.

3. Vorrichtung nach Anspruch 2, **dadurch gekennzeichnet, daß** eine im Schacht bewegliche Platte (7) eine Stegbrücke zwischen dem Förderer (3) und dem Übernahmeförderer bildet.

4. Vorrichtung nach Anspruch 1, **dadurch gekennzeichnet, daß** die Übernahmeelemente stirnseitig von einem Richtbalken (40) getragen sind, welcher wiederum über einen Hebemechanismus befestigt ist, bezüglich eines Elements für jede Reihe von Gegenständen auf dem Förderband.

5. Vorrichtung nach Anspruch 4, **dadurch gekennzeichnet, daß** eine Reihe von Fühlern (55) die von dem Übernahmeelementen auf jeder Spur (11 bis 16) des Förderers abgesetzten Gegenstände zählt.

6. Vorrichtung nach Anspruch 4, **dadurch gekennzeichnet, daß** der Richtbalken transversal verschiebbar angebracht ist.

7. Vorrichtung nach Anspruch 4, die zwischen dem Hauptförderband und dem sekundären Sammelförderband (49) angeordnet ist, **dadurch gekennzeichnet, daß** der Fördeder im rückwärtigen Bereich eine Spur (16) aufweist, die von den vorherigen durch eine neutrale Zone (14, 15) getrennt ist, deren Breite dem Längsrichtungs-Raumbedarf des Balkens der Verteilerbrücke entspricht.

8. Vorrichtung nach Anspruch 7, **dadurch gekennzeichnet, daß** der Balken mit zwei Kammelementen versehen ist, von denen sich eines (42) nach vorne bewegt, wenn die Brücke die Gegenstände vom Hauptförderband abzieht, und sich das andere (43) nach hinten bewegt, wenn es in Verbindung mit dem Sekundärförderband betrieben wird.

9. Vorrichtung nach Anspruch 4, **dadurch gekennzeichnet, daß** die Übernahmeelemente Gruppen von Saugorganen mit stirnseitigen Saugnäpfen (51) sind, die durch Ansaugen zur Niederdruckseite hin arbeiten.

10. Vorrichtung nach Anspruch 9, **dadurch gekennzeichnet, daß** jede Gruppe von Saugorganen elastische Saugnäpfe aufweist, die mit einem Venturielement (52) verbunden sind, welches ein von einem Relais (54), das von einem Mikroprozessor gesteuert wird, geregeltes Elektroventil (53) versorgt.

11. Vorrichtung nach Anspruch 10, **dadurch gekennzeichnet, daß** eine Sperre (56) des normalen Ausgangs der Venturielemente ein Entleeren der Saugnäpfe ermöglicht.

12. Vorrichtung nach Anspruch 9, **dadurch gekennzeichnet, daß** im Verlauf eines von einem Mikroprozessor gesteuerten Arbeitszyklus die Brücke :
— sich den Gegenständen (X) der vordersten Reihe entgegen nach vorne bewegt ;
— diese bei herabgesenktem Balken einen nach dem anderen erfaßt, sie bei Bedarf neu ausrichtet und sie leicht vom Band abhebt ;
— bis zum Übernahmeförderer zurückfährt, wobei der Unterdruck an den Saugnäpfen nun selektiv aufgehoben wird, um die Gegenstände auf die gewünschten Spuren des Forderers zu verteilen ;
— schließlich den Weg für die Abfuhr freigibt ;
— und, während sich der Balken wieder hebt, die Gegenstände überbrückt, die umgelenkt werden sollen, um bei herabgesenktem Balken oberhalb vom Förderer in Wartestellung zu gelangen.

13. Vorrichtung nach Anspruch 12, **dadurch gekennzeichnet, daß** die Brücke zwei Endstellungen (45, 46) für die Rückstellung aufweist.

14. Vorrichtung nach Anspruch 12, **dadurch gekennzeichnet, daß** die Brücke einen zwischen zwei Endpositionen (U, V) variablen Vorschub hat.

15. Vorrichtung nach Anspruch 14, **dadurch gekennzeichnet, daß** eine am Kopf der Brücke angeordnete Lichtschranke (59) deren Arbeitszylkus steuert.

## Claims

1. Device for recovering articles from the downstream end of a conveyor (3) by a transverse conveyor (10) which conveys them in a direction transverse to that of the first conveyor, by means of a transfer device equipped with a row of individual gripping members disposed transversely to the first conveyor, characterized in that these members are extractor members (50) with individual control of the gripping, that the recovery conveyor is a pallet conveyor (10) having multiple, independent tracks, and that the transfer device is a switching bridge (30) movable longitudinally with respect to the first conveyor (3) and adapted for releasing the articles separately onto the one or the other of said tracks.

2. Device according to Claim 1, characterized in that said transverse conveyor is preceded by a pit (5) enabling abnormal articles to be rejected.

3. Device according to Claim 2, characterized in that a plate (7), movable into the pit, constitutes a gangway between the first conveyor (3) and the recovery conveyor.

4. Device according to Claim 1, characterized in that the gripping members are carried at the front of a sorter bar (40), itself mounted by means of an elevator mechanism, in a proportion of one gripping member for each column of articles on the first conveyor.

5. Device according to Claim 4, characterized in that a series of detectors (55) count the articles deposited on each track (11 to 16) of the transverse conveyor by the gripping members.

6. Device according to Claim 4, characterized in that the sorter bar is mounted with a transverse freedom of movement.

7. Device according to Claim 4, interposed between the principal (first) conveyor and an auxiliary (third) accumulator conveyor (4), and characterized in that the transverse conveyor comprises, at the rear, a track (16) separated from the aforementioned tracks by a neutral zone (14, 15), the width of which corresponds to the longitudinal dimension of the bar of the switching bridge.

8. Device according to Claim 7, characterized in that the bar is equipped with two combs, the one of them (42) operating towards the front when the bridge is extracting the articles from the principal (first) conveyor, the other (43) towards the rear, when it is operating in conjunction with the secondary (third) conveyor.

9. Device according to Claim 4, characterized in that the gripping members are extractor groups with front suction cups (51) operating by suction in the downstream direction.

10. Device according to Claim 9, characterized in that each extractor group possesses flexible suction cups, connected to a venturi (52), which is supplied by an electrically operated valve (53) governed by a relay (54), controlled by a microprocessor.

11. Device according to Claim 10, characterized in that a stop device (56) for the normal outlet from the venturis enables the suction cups to be scavenged.

12. Device according to Claim 9, characterized in that, during its operating cycle controlled by a microprocessor, the bridge :
— advances to a position in front of the articles (X) of the front row ;
— with the bar lowered, seizes the articles one by one, realigning them if required and releasing them slightly from the conveyor belt ;
— moves backwards as far as the recovery conveyor, the vacuum at the suction cups being then selectively stopped in order to distribute the articles onto the desired tracks of the recovery conveyor ;
— finally disengages the discharge route ;
— with the sorter bar ascending, moves above the articles which have just been switched out to come back into a waiting position, with the bar lowered, upstream of the recovery conveyor.

13. Device according to Claim 12, characterized in that the bridge has two extreme backward positions (45, 46).

14. Device according to Claim 12, characterized in that the bridge possesses a forward movement variable between two extreme positions (U, V).

15. Device according to Claim 14, characterized in that an optical barrier (59) mounted at the head of the bridge governs its operating cycle.

*Fig. 1*

*Fig. 2*

EP 0 277 872 B1

Fig. 3

**Fig. 4**